# EUROPEAN PATENT APPLICATION

(11) **EP 1 398 751 A1**
(43) Date of publication of application: **17.03.2004**
(21) Application number: 01938645.7
(22) Date of filing: 13.06.2001
(51) Int. Cl.: G09B 19/00, H04N 7/14

(54) **CONVERSATION POWER TESTING SYSTEM**

(71) Applicant: Nova Corporation, Osaka-shi, Osaka 542-0086 (JP)
(72) Inventor: SUDO, Satoru, c/o GINGANET Corporation, Tokyo 150-0043 (JP)
(74) Representative: Schubert, Siegmar
(86) International application number: PCT/JP2001/005036
(87) International publication number: WO 2002/103656

(57) **Abstract**

In the conversation skills testing system of this invention, the first examiner's videophone terminal 11 and the examinee's videophone terminal 26 are connected with each other via the circuit network 25. A test image is read out from the image/voice storage device 23, sent to the examinee's videophone terminal 26, and shown on the display screen of the examinee's videophone terminal 26. Based on an examinee's talk or conversation between the examiner and the examinee about contents of the test image, examinee's conversation skills are judged. Therefore, an examinee who may even live in a distant place can take a conversation skills test easily and at any time.

## Description

### TECHNICAL FIELD

This invention relates to a conversation skills testing system which employs videophone terminals and a network, in order that conversation skills (i.e. oral proficiency) of an examinee can be judged even if an examiner and an examinee are located remotely from each other.

### BACKGROUND ART

Teaching of language conversation requires testing and judgement of conversation skills in order to assess the achievement and the education level. In this regard, conversation skills should be judged fairly for a large number of examinees. Therefore, as a common way to judge examinee's conversation skills, a large number of examinees are called in at a predetermined test room, and a small number of examiners are sent there and speak personally with each examinee under the same judgement criteria.

Nevertheless, among many examinees, some may not be able to take a test because they live in a distant place or because they are engaged on the designated test day. Bearing this in mind, it may be proposed to set test rooms in various regions or to schedule tests on di fferent dates and times. To realize these proposals, however, a small number of examiners have to go to various regions on different dates and times, which puts a greater burden on examiners. In addition, it is extremely difficult to increase the number of examiners with sufficient experience and ability.

### DISCLOSURE OF THE INVENTION

This invention is made in the light of these conventional problems. An object of the invention is to provide a conversation skills testing system according to which an examinee who may even live in a distant place can take a conversation skills test easily and at any time.

To solve the problems, this invention provides a conversation skills testing system which comprises an examiner's videophone terminal, an examinee's videophone terminal which is connected with the examiner's videophone terminal via a network, and an image storage means which stores a test image in advance. The test image is read out from the image storage means, sent to the examinee's videophone terminal via the network, and shown on a display screen of the examinee's videophone terminal. The examiner's videophone terminal and the examinee's videophone terminal allow an examiner to listen to an examinee's talk which is told about contents of the test image.

According to the thus arranged invention, the examiner's videophone terminal and the examinee's videophone terminal enable an examiner to listen to an examinee's talk which is told about contents of the test image. Based on the examinee's talk, the examiner can judge examinee's conversation skills. Besides, the examiner can test a number of examinees one after another as scheduled in advance, without the trouble of travelling. From the examinee's point of view, an examinee who may even live in a distant place can take a test at any time. Furthermore, a number of examiners can be tested and judged fairly because they speak about contents of test images which are set beforehand.

Further in this invention, the image storage means stores a plurality of test images, and the test images are sequentially read out from the image storage means, sent to the examinee's videophone terminal, and shown on the display screen of the examinee's videophone terminal.

In this case, a plurality of test images are shown on the display screen of the examinee's videophone terminal, and an examinee is asked to speak about contents of these test images. This arrangement can realize accurate judgement of examinee's conversation skills.

Still further in this invention, the image storage means stores test images for more than one grade of conversation skills. Depending on an assumed level of examinee's conversation skills, one of the test images is read out from the image storage means and sent to the examinee's videophone terminal via the network.

In this case, an examiner can choose one of the test images depending on examinee's conversation skills, thereby adjusting a test menu to the examinee's conversation skills. Besides, since various scenes are chosen from the test images as required, it is possible to diversify test menus.

Moreover, in this invention, the image storage means stores a voice in addition to the test image. The test image and the voice are read out from the image storage means and sent to the examinee's videophone terminal via the network. Then, the test image is shown on the display screen of the examinee's videophone terminal, whereas the voice is reproduced at the examinee's videophone terminal.

In this case, the examinee is required not only to watch the test image but also to listen to the voice. The examinee talks about contents of the test image he/she is watching and the voice he/she has listened to.

Yet further in this invention, judgement of examinee's conversation skills is based on a plurality of prescribed judgement standards.

For example, conversation skills are judged for the judgement standards such as communication skills, accuracy, vocabulary and the like, and also for total skills. This arrangement can realize accurate judgement of examinee's conversation skills.

Also in this invention, a plurality of examiner's videophone terminals are equipped, and the examiner's videophone terminals and the examinee's videophone terminal allow examiners to listen to an examinee's talk.

In this case, more than one examiner can listen to the talk of one examinee and judge his/her conversation skills. Consequently, judgement can be more accurate.

### BRIEF DESCRIPTION OF DRAWINGS

Fig. 1 is a block diagram illustrating an embodiment of the conversation skills testing system of this invention.
Fig. 2 is a flowchart which describes how an examinee's application for a test is processed.
Fig. 3 is a flowchart which describes how an examinee takes a test in reality.
Figs. 4(a), (b) and (c) illustrate preliminary test images to be shown on a display screen of an examinee's videophone terminal, and written explanations which correspond to the respective images.
Figs. 5(a) and (b) illustrate main test images at Level 7C, and written explanations which correspond to the respective images.
Figs. 6(a) and (b) illustrate main test images at Level 7B, and written explanations which correspond to the respective images.
Figs. 7(a) and (b) illustrate test images at Level 7A, and written explanations which correspond to the respective images.
Figs. 8(a) and (b) illustrate test images at Level 6, and written explanations which correspond to the respective images.
Figs. 9(a) and (b) illustrate test images at Level 5, and written explanations which correspond to the respective images.
Figs. 10(a) and (b) illustrate test images at Level 4, and written explanations which correspond to the respective images.
Figs. 11 (a) and (b) illustrate test images at Level 3, and written explanations which correspond to the respective images.
Figs. 12 (a) and (b) illustrate test images at Level 2, and written explanations which correspond to the respective images.

### BEST MODE FOR CARRYING OUT THE INVENTION

An embodiment of this invention is hereinafter described, with reference to the attached drawings.

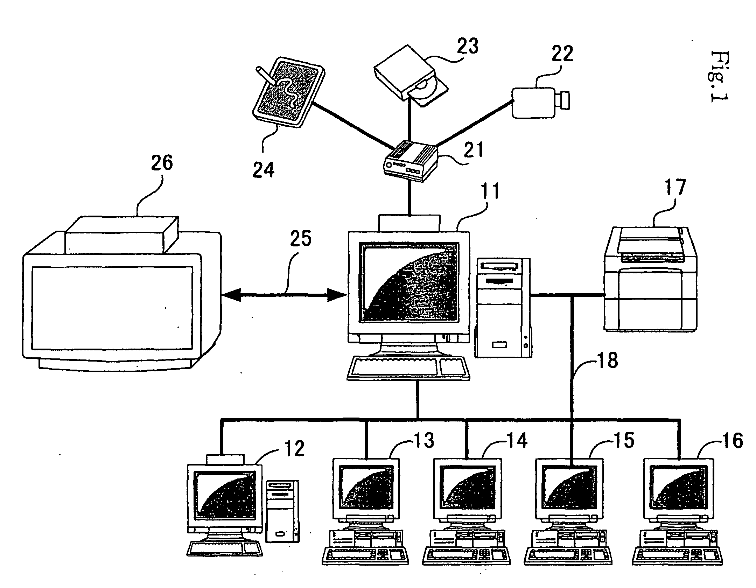

Fig. 1 is a block diagram illustrating an embodiment of the conversation skills testing system of this invention. In this embodiment, the conversation skills testing system is divided into an examiner side and an examinee side. The examiner side includes first and second examiner's videophone terminals 11, 12, an examinee card database management terminal 13, an examiner schedule database management terminal 14, a booking database management terminal 15, an examinee information database management terminal 16, a printer 17 and the like, which are linked together by a local area network (LAN) 18. In addition, the first examiner's videophone terminal 11 is connected, via a selector 21, with an image taking device 22, an image/voice storage device 23 and a whiteboard 24.

The examinee side is simply provided with an examinee's videophone terminal 26 to be used by an examinee. The examinee's videophone terminal 26 can be connected with the first and second examiner's videophone terminals 11, 12 on the examiner side, by way of a circuit network 25.

Preferably, the first and second examiner's videophone terminals 11, 12 and the examinee's videophone terminal 26 employ advanced multimedia videophones which can send and receive digital signals.

When connection is established between the first examiner's videophone terminal 11 and the examinee's videophone terminal 26 via the circuit network 25, the examiner at the videophone terminal 11 and the examinee at the videophone terminal 26 can talk with each other. Meanwhile, an image taking device (not shown) of the examinee's videophone terminal 26 takes an image of the examinee's face. The examinee's facial image is transmitted via the circuit network 25, and presented on the display screen of the first examiner's videophone terminal 11. At the first examiner's videophone terminal 11, if the image taking device 22 is selected by the selector 21, the image taking device 22 takes an image of the examiner's face. Likewise, the examiner's facial image is transmitted via the circuit network 25, and presented on the display screen of the examinee's videophone terminal 26.

If the image/voice storage device 23 is selected by the selector 21, a test image and a written explanation of a test menu are read out from the image/voice storage device 23 and synthesized with the examinee's facial image. The synthetic image is shown on the display screen of the first examiner's videophone terminal 11. The test image is further transmitted via the circuit network 25 and presented on the display screen of the examinee's videophone terminal 26.

If the whiteboard 24 is selected by the selector 21, an image of characters, signs, etc. written on the whiteboard 24 is synthesized with the examinee's facial image. The synthetic image is shown on the display screen of the first examiner's videophone terminal 11. The image of characters, signs, etc. is further transmitted via the circuit network 25 and presented on the display screen of the examinee's videophone terminal 26.

Instead, the image taking device 22, the image/voice storage device 23 and the whiteboard 24 may be selected in a suitable combination by the first examiner's videophone terminal 11. In this case, selected images are synthesized with the examinee's facial image and presented on the display screen of the first examiner's videophone terminal 11. Besides, a synthetic image of the selected images is presented on the display screen of the examinee's videophone terminal 26.

Furthermore, with examiner's manipulation of the first examiner's videophone terminal 12, it is possible to select an image of a second examiner taken by an image taking device (not shown) of the second examiner's videophone terminal 12, or to make a synthetic image containing the second examiner's facial image. In this case, the display screen of the examinee's videophone terminal 26 shows the second examiner's facial image or a synthetic image composed of any of the above images. At the same time, the display screen of the first examiner's videophone terminal 11 shows a synthetic image composed of the examinee's facial image and the examiner's facial image at the second examiner's videophone terminal 12. Likewise, the display screen of the second examiner's videophone terminal 12 shows the examinee's facial image and the examiner's facial image at the first examiner's videophone terminal 11. This situation enables the two examiners and the examinee to talk with each other.

Thus, the display screen of the first or second examiner's videophone terminal 11, 12 constantly shows the examinee's face, while selectively showing the examiner's face, the test image, the written explanation of a test menu, the characters and signs, etc. In the meantime, the display screen of the examinee's videophone terminal 26 selectively shows the examiner's face, the test image, the characters and signs, etc. In any state, an examiner and an examinee, or two examiners and an examinee, can talk with each other.

In the conversation skills testing system of this arrangement, the first examiner's videophone terminal 11 or the second examiner's videophone terminal 12, and the examinee's videophone terminal 26, allow at least one examiner to listen to an examinee's talk about contents of the test image and thereby to judge examinee's conversation skills.

For examinee's convenience, at least one examinee's videophone terminal 26 is installed at each of scattered branches, and an examinee is permitted to take a test with any examinee's videophone terminal 26. For examiner's convenience, the first and second examiner's videophone terminals 11, 12, the management terminals 13-16, and the like are concentrated in a headquarters.

In this context, the synthetic image is a combination of more than one type of image, with each image being arranged independently in its own area. On the display screen, each image appears independently in its own area. Also in this context, the test image may be stationary or animated. Further, the test image may be combined with a voice, in which case the videophone terminal not only presents a test image but also reproduces a voice.

The second examiner's videophone terminal 12 functions in a similar manner to the first examiner's videophone terminal 11. Furthermore, it is possible to provide an additional examiner's videophone terminal which functions equivalently to the first and second examiner's videophone terminals 11, 12.

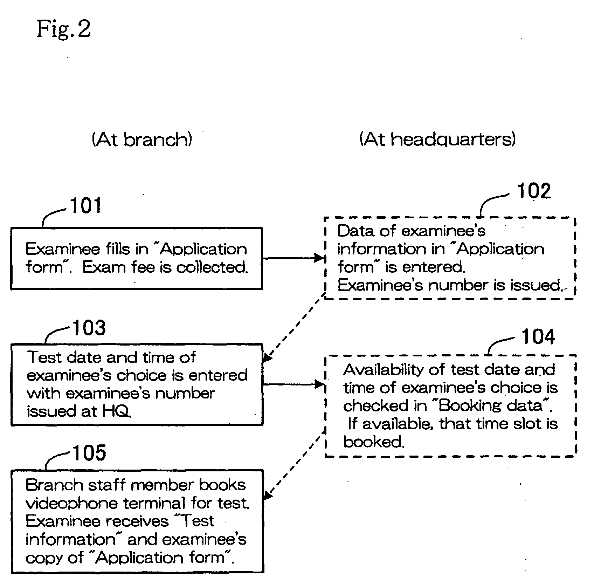

Now, turning to the flowchart in Fig. 2, the description details how an examinee's application for a test is processed.

For examinee's convenience, an examinee is permitted to apply for a test at any of a plurality of branches, so that an examinee only needs to choose and go to the nearest branch. At the branch, a staff member hands an application form to the examinee, who fills out required entries in the form. Such entries may include name, sex, address, telephone number, date of birth, occupation, test language, experience in the test language, etc. Thereafter, the entries in the application form are input into a computer by a branch staff member and sent on-line to a computer at the headquarters (Step 101).

When a computer at the headquarters receives and checks the entries in the application form, an examinee's number is issued and sent on-line to the computer at the branch (Step 102). When the branch computer receives the examinee's number, a staff member enters the test date and time chosen by the examinee. The test date and time of examinee's choice is sent with the examinee's number to the headquarters computer (Step 103). At the headquarter, on receiving the examinee's number and the test date and time of examinee's choice, the computer checks if this test date and time is free on the schedule. If so, the examinee's number and the test date and time are entered in the schedule (Step 104).

The test schedule, which is managed by the booking database management terminal 15 (see Fig. 1), is confirmed and registered by manipulation of this management terminal 15. Simultaneously, the examinee's number and the test date and time are added to the schedule of an examiner who will test this examinee. The examiner's schedule, which is managed by the examiner schedule database management terminal 14 (see Fig. 1), is confirmed and registered by manipulation of the management terminal 14. In addition, contents of the application form are registered in the examinee information database management terminal 16.

Afterwards, the examinee's videophone terminal 26 installed at the branch is scheduled to hold a test at the date and time chosen by the examinee. Lastly, the examinee receives an admission card and a manual which contains test information (Step 105).

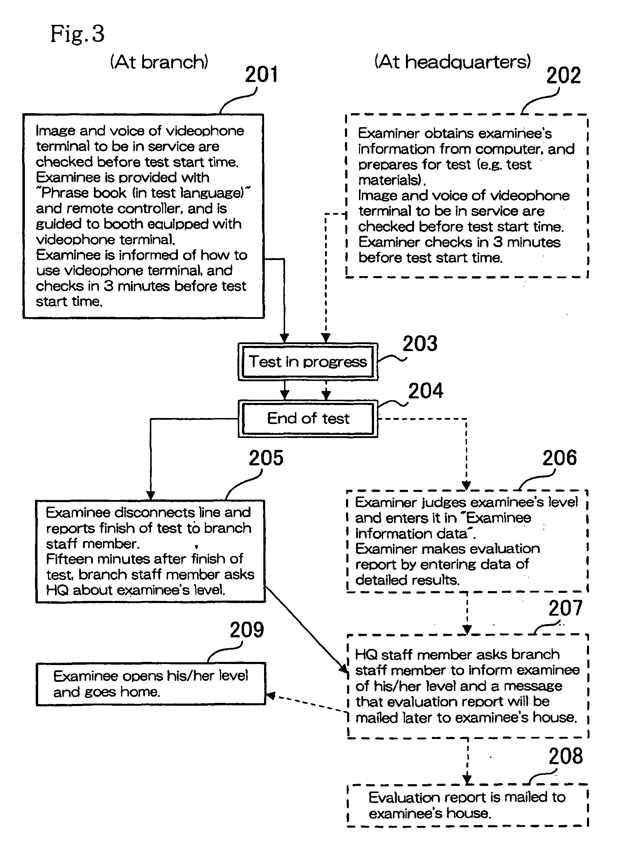

Turning next to the flowchart in Fig. 3, the description details how an examinee takes a test in reality.

At the branch, an examinee is given a remote controller for the examinee's videophone terminal 26 which is allotted to the examinee, and informed of the process of the conversation skills test and how to operate the examinee's videophone terminal 26 (Step 201). On the other hand, an examiner at the headquarters operates the first examiner's videophone terminal 11 to access the examinee information database management terminal 16. From this management terminal 16, contents of the application form of the examinee are read out and shown on the display screen of the first examiner's videophone terminal 11. Then, the examiner checks the contents. If the examinee has already sat for at least one test, his/her card is registered in the examinee card database management terminal 13. To check this card, the examiner operates the first examiner's videophone terminal 11 to access the examinee card database management terminal 13. From this management terminal 13, the examinee card is read out and shown on the display screen of the first examiner's videophone terminal 11 (Step 202).

After such preparation for the conversation skills test is complete, the first examiner's videophone terminal 11 and the examinee's videophone terminal 26 are connected with each other via the circuit network 25 in order to conduct a test (Step 203). At the end of the test, the videophone terminals 11, 26 are disconnected from each other (Step 204). After a predetermined time, a branch staff member telephones the headquarters and asks the judgement result of the examinee's conversation skills (Step 205). In the meantime, the examiner at the headquarters determines the level of examinee's conversation skills and evaluates his/her conversation skills in detail. The level and detailed evaluation of examinee's conversation skills are registered in the form of an examinee card, into the examinee card database management terminal 13 (Step 206). In reply to a telephone call from the branch, the headquarters reports the level of examinee's conversation skills, and also mentions that an evaluation report containing detailed evaluation will be mailed later (Step 207). In due course, an evaluation report is mailed from the headquarters to the examinee's house (Step 208). Meanwhile, a branch staff member verbally informs the examinee of the level of his/her conversation skills, and instructs the examinee to wait for an evaluation report which is to be mailed to his/her house (Step 209) .

Regarding the evaluation report, a number of sample evaluation messages which indicate contents of evaluation are drafted in advance. Such sample messages are available in a language tested by the examiner and in a language daily spoken by the examinee. From the sample messages in the examiner's language, the examiner selects some messages which correspond to evaluation of the examinee's conversation skills. In concordance with the selected messages, the examiner picks up sample messages in the examinee's language and fills them in, as detailed evaluation, on the evaluation report.

Next, with respect to Step 203 in Fig. 3, a sequence of test procedures are mentioned in detail. For the purpose of description, an English conversation skills test is taken as an example.

To start with, connection between the first examiner's videophone terminal 11 and the examinee's videophone terminal 26 is established via the circuit network 25. Initially, the image taking device 22 is selected by the selector 21 on the first examiner's videophone terminal 11 side. Hence, at this stage, the examiner's facial image appears on the display screen of the examinee's videophone terminal 26. Likewise, the examinee's facial image appears on the display screen of the first examiner's videophone terminal 11. In this situation, the examiner attempts a simple conversation with the examinee and assumes the level of his/her conversation skills. For example, the examinee's conversation skills are assumed to fall in any of nine levels (Level 7C, Level 7B, Level 7A, Level 6, Level 5, Level 4, Level 3, Level 2, and Level 1) which are set in advance. In this embodiment, Level 7C is the lowest level for those who have hardly any knowledge of English, and Level 1 is the highest level for those who are comparable to native speakers.

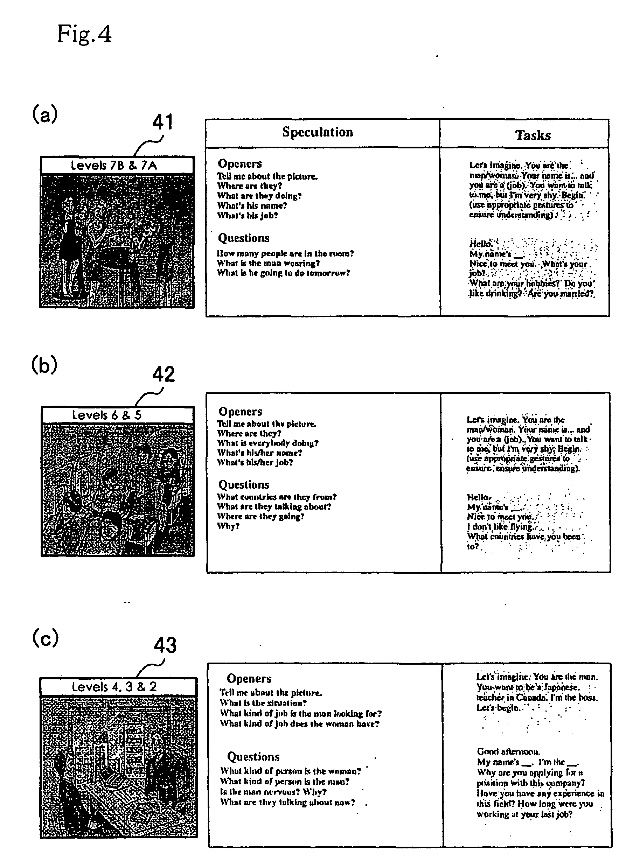

The image/voice storage device 23 stores preliminary test images 41, 42 and 43 as shown in Figs. 4(a), (b) and (c), together with written explanations under "Speculation" and "Tasks" which correspond to the respective preliminary test images. In a situation where the image/voice storage device 23 is selected by the selector 21, any of the preliminary test images and its corresponding written explanation under "Speculation" and "Tasks" are read out from the image/voice storage device 23. Thereafter, the display screen of the first examiner's videophone terminal 11 shows this preliminary test image and its written explanation. On the other hand, the display screen of the examinee's videophone terminal 26 shows the thus selected preliminary test image. In this situation, the examiner verbally questions the examinee, referring to the preliminary test image and the written explanation under "Speculation" and "Tasks". In response, the examinee answers examiner's questions aloud, while watching the preliminary test image. Based on the examinee's talk, the examiner assumes the level of his/her conversation skills.

The preliminary test image 41 and the written explanation under "Speculation" and "Tasks" which corresponds to the preliminary test image 41, as shown in Fig. 4(a), are suitable for assumption of about Levels 7A and 7B. The preliminary test image 42 and the written explanation under "Speculation" and "Tasks" which corresponds to the preliminary test image 42, as shown in Fig. 4(b), are suitable for assumption of about Levels 6 and 5. The preliminary test image 43 and the written explanation under "Speculation" and "Tasks" which corresponds to the preliminary test image 43, as shown in Fig. 4(c), are suitable for assumption of about Levels 4, 3 and 2.

Where appropriate, the preliminary test images may be switched from one to another. For example, the examinee may be first asked to speak about the preliminary test image 41 of Fig. 4 (a), and again asked to speak about the preliminary test image 42 of Fig. 4(b). Furthermore, examiner's verbal questions may be substituted with a voice which tells questions and the like about the preliminary test image. The voice is read out from the image/voice storage device 23 and reproduced at the examinee's videophone terminal 26. An examinee's talk responding to this voice can be judged for assumption of the level of examinee's conversation skills.

After the level of examinee's conversation skills are assumed in this manner, a main test image for the assumed level is read out from the image/voice storage device 23. This main test image is presented on the display screen of the first examiner's videophone terminal 11 as well as on the display screen of the examinee's videophone terminal 26.

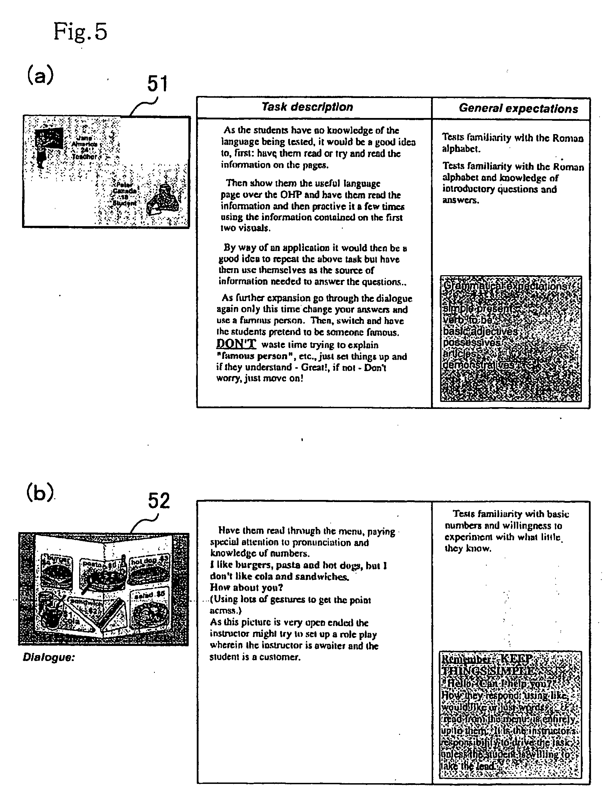

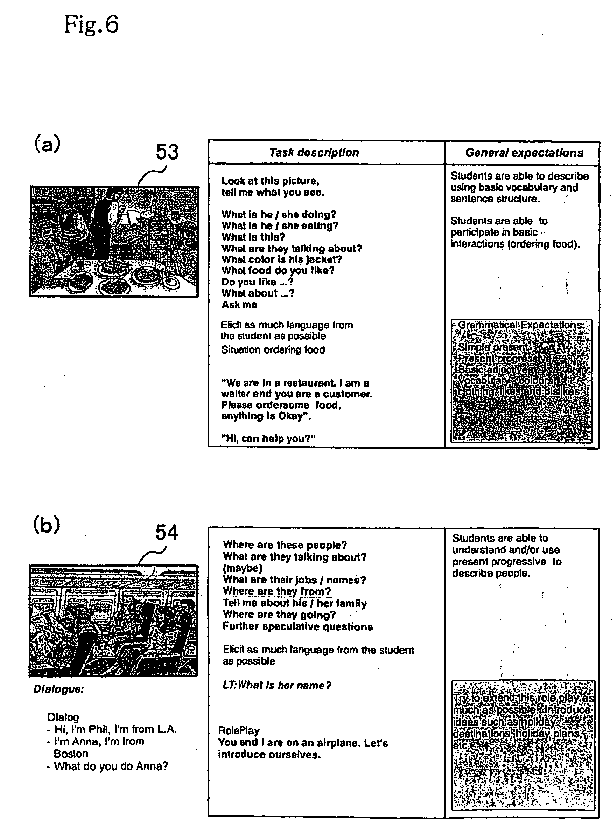

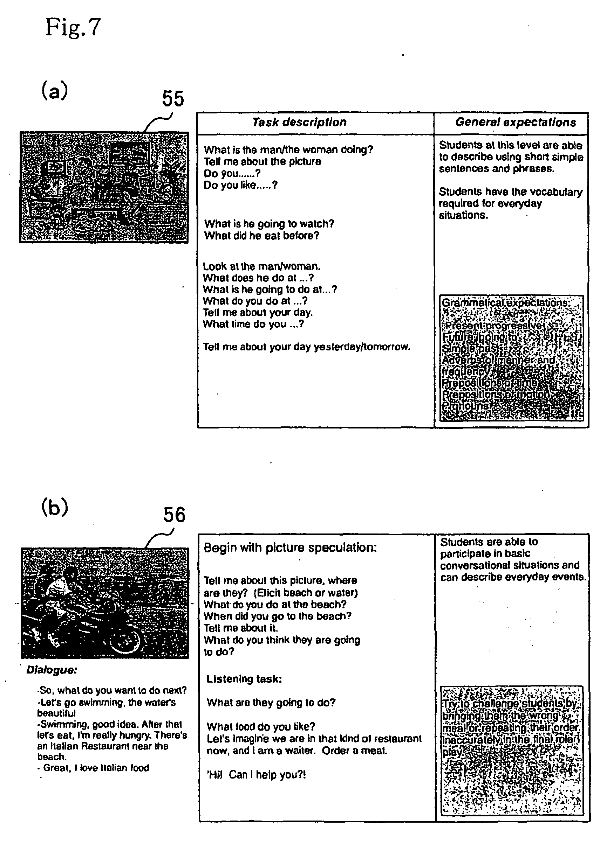

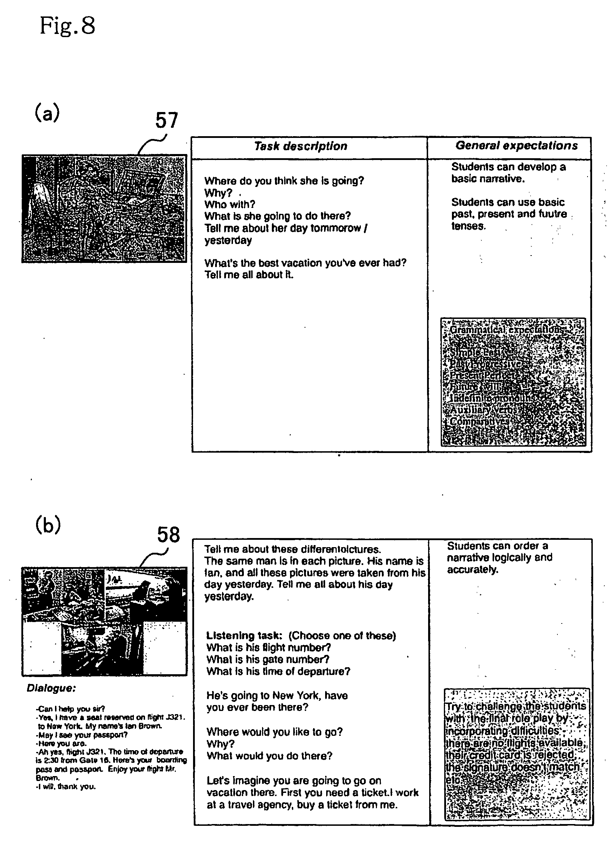

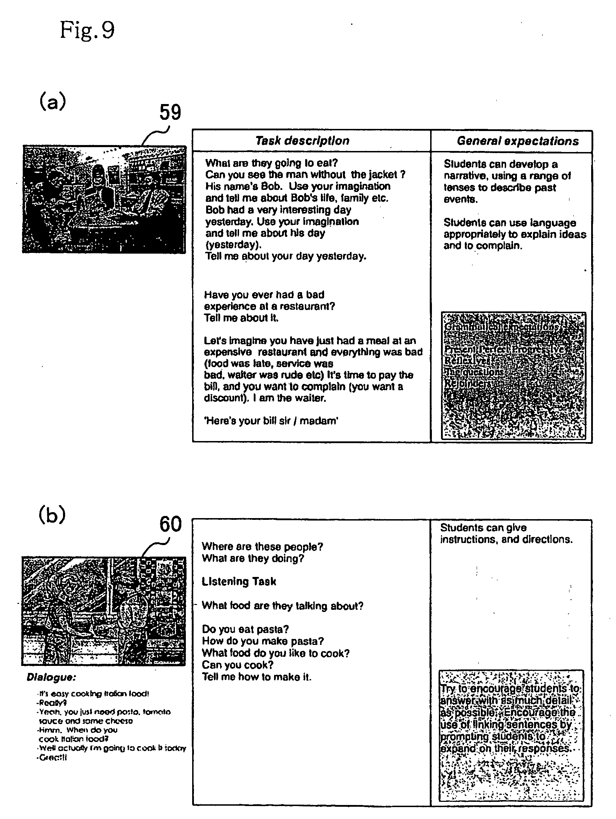

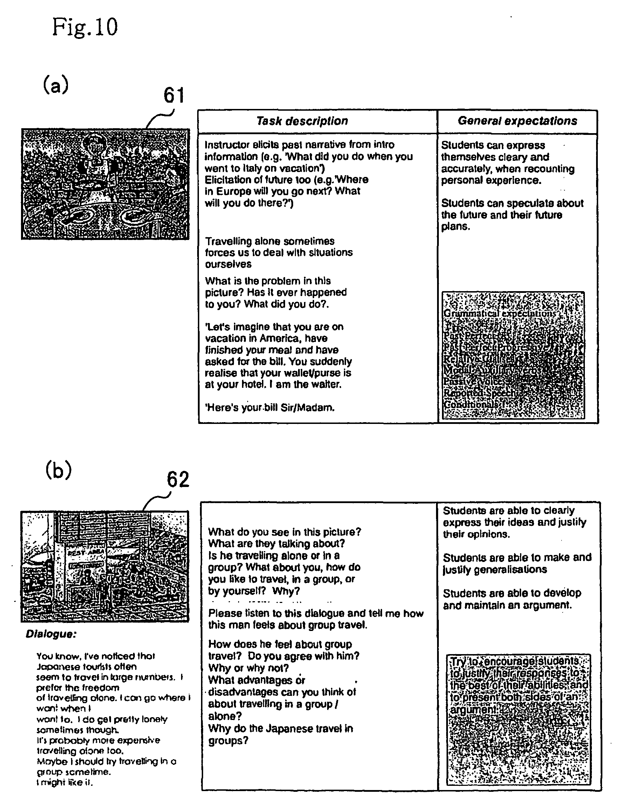

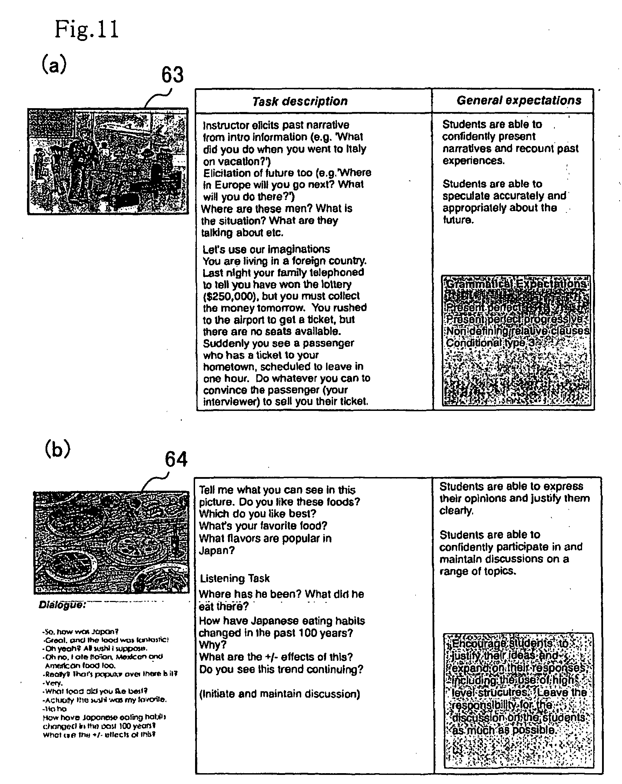

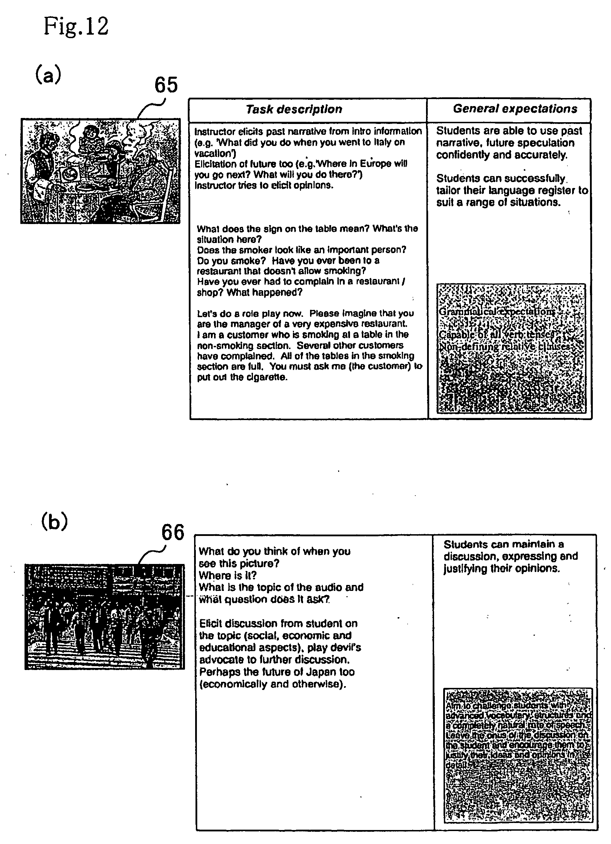

At every level, the conversation skills test involves two tasks, for each of which a main test image and a written explanation are prepared. By way of example, concerning Level 7C as illustrated in Figs. 5 (a) and (b), the image/voice sto.rage device 23 stores main test images 51, 52 and written explanations under "Task description" and "General expectations" which correspond to the main test images. Concerning Level 7B as illustrated in Figs. 6 (a) and (b), the device 23 stores main test images 53, 54 and written explanations under "Task description" and "General expectations" which correspond to the main test images. Concerning Level 7C as illustrated in Figs. 7 (a) and (b), the device 23 stores main test images 55, 56 and written explanations under "Task description" and "General expectations" which correspond to the main test images. Concerning Level 6 as illustrated in Figs. 8 (a) and (b) , the device 23 stores main test images 57, 58 and written explanations under "Task description" and "General expectations" which correspond to the main test images. Concerning Level 5 as illustrated in Figs. 9(a) and (b), the device 23 stores main test images 59, 60 and written explanations under "Task description" and "General expectations" which correspond to the main test images. Concerning Level 4 as illustrated in Figs. 10(a) and (b), the device 23 stores main test images 61, 62 and written explanations under "Task description" and "General expectations" which correspond to the main test images. Concerning Level 3 as illustrated in Figs. 11(a) and (b), the device 23 stores main test images 63, 64 and written explanations under "Task description" and "General expectations" which correspond to the main test images. Concerning Level 2 as illustrated in Figs. 12 (a) and (b), the device 23 stores main test images 65, 66 and written explanations under "Task description" and "General expectations" which correspond to the main test images.

Provided that the examinee's conversation skills are assumed at Level 6, for example, the image/voice storage device 23 is selected by the selector 21. Then, the main test images 57, 58 and the written explanations under "Task description" and "General expectations" which correspond to the main test images, as illustrated in Fig. 8(a) and (b), are read out sequentially from the image/voice storage device 23. Each of these main test images is presented along with its corresponding written explanation, on the display screen of the first examiner's videophone terminal 11. Besides, the main test images 57, 58 are sent one after another to the examinee's videophone terminal 26, and sequentially presented on the display screen of the examinee's videophone terminal 26. The examiner verbally questions the examinee, referring to each of the main test images 57, 58 and its corresponding written explanation under "Speculation" and "Tasks". In response, the examinee answers examiner's questions aloud, while watching the main test image.

Alternatively, as in the case illustrated in Fig. 8(b), a voice reading "Dialogue" which corresponds to the main test image 58 may be read out from the image/voice storage device 23 and reproduced at the first examiner's videophone terminal 11 and the examinee's videophone terminal 26. The examiner and the examinee exchange questions and answers about this dialogue.

Again, the examiner assumes the level of examinee's conversation skills, based on his/her. talk.

While a test is conducted at an assumed level, the examiner may find that the level is assumed wrongly. In this case, the examiner can switch levels so as to restart a test from the beginning or to continue a test from halfway. The examiner can switch levels repeatedly. As a result, the level of examinee's conversation skills can be judged accurately.

In addition, there are a plurality of prescribed judgement standards including, for example, communication skills, accuracy, vocabulary, fluency, listening skills, etc. The examiner determines levels of examinee's conversation skills for respective judgement standards. Based on such levels, the examiner also judges the total level of the examinee's conversation skills. As a result, the level of examinee's conversation skills can be judged accurately.

In order to bring out examinee's skills to the full, the examiner is desired to be professional and friendly, and to be objective without being subjective.

As already mentioned, a second examiner at the second examiner's videophone terminal 12 may be shown on the display screen of the examinee's videophone terminal 26, and conversation may be exchanged among the two examiners at the first and second examiner's videophone terminals 11, 12 and the examinee. In this case, examinee's conversation skills, judged by two examiners, can be more accurate.

Where necessary during a test, characters, signs and the like may be written on the whiteboard 24 and shown on the display screen of the examinee's videophone terminal 26.

As mentioned earlier, the level of the thus judged examinee's conversation skills is immediately reported to the examinee by telephone. An evaluation report containing detailed evaluation will be mailed later.

In the conversation skills testing system of this embodiment, the examiner's videophone terminal and the examinee's videophone terminal are connected with each other via the circuit network, so that a test image can be shown on the display screen of the examinee's videophone terminal. Based on the examinee's talk or conversation between the examiner and the examinee about contents of the test image, examinee's conversation skills are judged. Therefore, an examinee who may even live in a distant place can take a conversation skills test at any time.

It should be noted that this invention is not limited to the above embodiment, but can be modified in various manners. To give some examples, the examinee can take a test at home if the examinee's videophone terminal is set at his/her house and connected with the examiner's videophone terminal via a circuit network. Further, if the examinee's home videophone terminal can serve as a computer, the examinee may apply for a test by communicating data between the computer at the examinee's home videophone terminal and the computer at the headquarters. Moreover, this invention can be applied to judgement of conversation skills not only in English but in any kinds of languages. It goes without saying that the number of levels and judgement standards may be increased or decreased as required. Additionally, any terminal which functions equivalently to the videophone terminal can be used as such.

## Claims

1. A conversation skills testing system which comprises an examiner's videophone terminal, an examinee's videophone terminal which is connected with the examiner's videophone terminal via a network, and an image storage means which stores a test image in advance,
wherein the test image is read out from the image storage means, sent to the examinee's videophone terminal via the network, and shown on a display screen of the examinee's videophone terminal, and wherein the examiner's videophone terminal and the examinee's videophone terminal allow an examiner to listen to an examinee's talk which is told about contents of the test image.

2. A conversation skills testing system according to claim 1, wherein the image storage means stores a plurality of test images, and wherein the test images are sequentially read out from the image storage means, sent to the examinee's videophone terminal, and shown on the display screen of the examinee's videophone terminal.

3. A conversation skills testing system according to claim 1, wherein the image storage means stores test images for more than one grade of conversation skills, and wherein, depending on an assumed level of examinee's conversation skills, one of the test images is read out from the image storage means and sent to the examinee's videophone terminal via the network.

4. A conversation skills testing system according to claim 1, wherein the image storage means stores a voice in addition to the test image, wherein the test image and the voice are read out from the image storage means and sent to the examinee's videophone terminal via the network, and wherein the test image is shown on the display screen of the examinee's videophone terminal, whereas the voice is reproduced at the examinee's videophone terminal.

5. A conversation skills testing system according to claim 1, wherein judgement of examinee's conversation skills is based on a plurality of prescribed judgement standards.

6. A conversation skills testing system according to claim 1, wherein a plurality of examiner's videophone terminals are equipped, and wherein the examiner's videophone terminals and the examinee's videophone terminal allow examiners to listen to an examinee's talk.
